(19)

**Europäisches Patentamt**
**European Patent Office**
**Office européen des brevets**

(11) **EP 2 719 724 A1**

(12) **EUROPEAN PATENT APPLICATION**
published in accordance with Art. 153(4) EPC

(43) Date of publication:
**16.04.2014 Bulletin 2014/16**

(21) Application number: **13789148.7**

(22) Date of filing: **15.04.2013**

(51) Int Cl.:
*C08L 21/00* (2006.01)     *C08L 27/16* (2006.01)
*C08L 33/08* (2006.01)     *C08L 101/00* (2006.01)

(86) International application number:
**PCT/JP2013/061220**

(87) International publication number:
**WO 2014/002582 (03.01.2014 Gazette 2014/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **26.06.2012   JP 2012143580**

(71) Applicant: **Kabushiki Kaisha Riken
Chiyoda-ku,
Tokyo 102-8202 (JP)**

(72) Inventors:
• **OOWADA, Akihiro
  Kashiwazaki-shi
  Niigata 945-8555 (JP)**
• **ITO, Hiroshi
  Kashiwazaki-shi
  Niigata 945-8555 (JP)**

(74) Representative: **Hooiveld, Arjen Jan Winfried et al
Arnold & Siedsma
Sweelinckplein 1
2517 GK Den Haag (NL)**

(54) **RESIN COMPOSITION AND SEAL MEMBER**

(57)     There are provided a resin composition that can maintain excellent elasticity even after use under high temperature and high pressure for a long period, and a seal member. One aspect of a resin composition according to the present invention is a resin composition comprising a rubber component; and a thermoplastic resin, wherein a maximum value of loss tangent (tan δ) in a temperature range of 20°C to 150°C is 0.2 or less.

*Fig.3*

EP 2 719 724 A1

# EP 2 719 724 A1

**Description**

**Technical Field**

The present invention relates to a resin composition and a seal member, and more particularly to a resin composition containing a rubber component and a thermoplastic resin, and a seal member using the same.

**Background Art**

In recent years, the demand for resin materials excellent in heat resistance and having low Compression Set has increased in various fields including automobile use. Examples of the applications of such resin materials include seal members (seal rings) for hydraulic Continuously Variable Transmissions (hereinafter referred to as "CVTs"). In the hydraulic CVT, the gear is continuously changed by correlatively changing the groove width of a pair of pulleys by the hydraulic pressure of a hydraulic pressure chamber to change the diameter of the pulleys. Usually, a fixed pulley is integrally formed on a drive shaft, and a movable pulley is formed in a housing that reciprocates along this shaft. A hydraulic pressure chamber is provided in the movable pulley, and by controlling the hydraulic pressure of the hydraulic pressure chamber, the movable pulley moves away from or close to the fixed pulley. Thus, the width of the groove portions formed in both pulleys, respectively, is increased or decreased to increase or decrease the radius of gyration of the belt wound around the pulleys to change the gear ratio in transmitting power. In order to fill the hydraulic pressure chamber with oil and generate hydraulic pressure, a seal ring made of a resin is mounted in a shaft groove formed on the outer peripheral surface of the shaft.

In the CVT, during the stop of the engine, the oil pump stops, and therefore, no hydraulic pressure is generated, and the seal ring is unloaded. In a conventional seal ring, in a state in which hydraulic pressure is generated, sufficient sealability is obtained, but in an unloaded state, adhesiveness to the inner peripheral surface of the housing is lost, and oil in the hydraulic pressure chamber drains. When the engine is restarted in such a state, time is required until the hydraulic pressure chamber is filled with oil. In addition, when the engine is started in a state in which the hydraulic pressure chamber is not filled with oil, damage due to seizure may occur in the rotating portion of the CVT. Therefore, a seal ring that can decrease oil leakage from a hydraulic pressure chamber even in an unloaded state without hydraulic pressure is required.

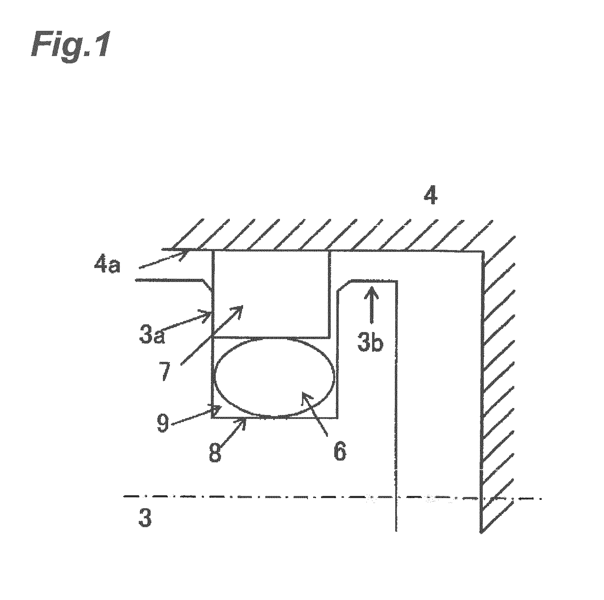

As a CVT seal ring, a combined seal ring constituted of an endless type resin ring 7 that is roughly rectangular in cross section and is disposed on the outer peripheral side, and an O ring 6 that is disposed on the inner peripheral side and gives expansive force to the resin ring, as shown in Figure 1, has been used. Generally, as the material of the resin ring 7, a polytetrafluoroethylene (PTFE) resin to which a filler is added, or the like is used, and as the material of the O ring 6, a rubber-like elastic body is used.

In such a conventional combined seal ring, the O ring 6 and the resin ring 7 are compressed, and mounted in the gap between a groove bottom 8 and the inner surface 4a of a housing 4. The assembly resistance in subsequently inserting a shaft 3 on which the O ring 6 and the resin ring 7 are mounted, into the housing 4 is high, and it is necessary to assemble the housing 4 using a press fitting apparatus. Therefore, problems are that the manufacturing cost increases, and the assembly trouble of the seal ring also cannot be detected. Therefore, in order to solve the problems of the above combined seal ring in terms of mountability and cost, dealing with a single seal ring is required.

In the CVT, a hydraulic pressure up to about 7 MPa is generated in the hydraulic pressure chamber, and therefore, a seal ring that has excellent wear resistance and sealability even under high hydraulic pressure is required. In addition, considering temperature increase due to heat generation during high speed operation and use in cold climate areas, resistance in the temperature region of -40°C to 150°C is required of a seal ring. Therefore, as the seal ring material, a material in which a fluorine-based resin, such as polytetrafluoroethylene (PTFE), modified polytetrafluoroethylene, or ethylene tetrafluoroethylene (ETFE), is filled with an additive, such as a carbon powder or carbon fibers, is used.

For example, as a resin composition that can be applied to a CVT, a composition in which a PTFE-based resin is blended with carbon black having a predetermined amount of DBP absorbed is disclosed in Patent Literature 1. A seal ring having this composition expands when absorbing oil. It is described that gaps in the radial direction of the seal ring, and the like due to creep deformation during high temperature are filled, and low temperature sealability can be improved, and therefore, there is excellent sealability even during low temperature immediately after the start of the operation of the hydraulic pressure apparatus. In addition, it is also shown that the seal ring in Patent Literature 1 is for high surface pressure, such as for CVTs, and therefore, for the purpose of improvements in wear resistance, creep resistance, and the like, carbon fibers or graphite can be blended.

It is considered that it is possible to decrease the amount of oil leakage at low temperature by using the seal ring in Patent Literature 1. However, the seal ring having the above configuration contains the PTFE-based resin as the main component, and therefore deforms plastically by being pressurized in an automatic transmission fluid at high temperature. Therefore, when the engine is stopped after operation to provide an unloaded state, it is difficult to maintain the adhesion state (adhesiveness) to the inner peripheral surface of the housing, and it is difficult to prevent oil leakage from the hydraulic pressure chamber. In order to solve such a problem, a resin material excellent in heat resistance and having low compression set is required.

As means for improving the compression set of resin materials, many proposals are made. For example, a highly resilient material which is composed of a polyvinyl chloride-based resin (1), a polyurethane (2), and a plasticizer (3), and in which a sea-island type phase-separated structure is observed by a transmission electron microscope, the size of the separated structure is 0.01 microns or more and 100 microns or less, and the polyurethane (2) is obtained by subjecting a polymer polyol and a compound having three or more isocyanate groups to an urethane reaction is disclosed in Patent Literature 2. It is described that this material is a material that is excellent in compression set and processability and is highly resilient.

In addition, a thermoplastic elastomer composition composed of (A) a (meth)acrylic block copolymer composed of (A1) a (meth)acrylic polymer block and (A2) an acrylic polymer block, (B) a compound containing two or more amino groups in one molecule, and (C) a thermoplastic resin, obtained by dynamically heat-treating (A) the (meth)acrylic block copolymer with (B) the compound in (C) the thermoplastic resin, and then further adding (D) a thermoplastic resin and kneading the mixture is disclosed in Patent Literature 3. The fact is described that this composition is excellent in the balance between hardness and mechanical strength, is excellent in rubber elasticity over a wide temperature range, high temperature creep performance, and molding processability, and is excellent in oil resistance and heat resistance while being a thermoplastic elastomer.

In the resin composition in the above Patent Literature 2, the polyvinyl chloride-based resin, which is a thermoplastic resin having a glass transition temperature near 87°C, is contained as an essential component. Therefore, in the high temperature region of the glass transition temperature or higher, the flowability of the resin composition increases, and the elasticity decreases, and therefore, sufficient sealing properties may not be obtained. In addition, it is also considered that by use under high temperature and pressurization at the glass transition temperature or higher, the resin composition deforms plastically, and the seal performance deteriorates.

On the other hand, as the thermoplastic resin added to the thermoplastic elastomer composition in Patent Literature 3, polyamide-based resins and polyester-based resins (polyethylene terephthalate, polybutylene terephthalate, and the like) are disclosed. Generally, the glass transition temperature of polyamide-based resins is about 50°C, and the glass transition temperature of polyester-based resins is about 50°C (polybutylene terephthalate) and about 69°C (polyethylene terephthalate). Therefore, also in the thermoplastic elastomer in Patent Literature 3, as in the resin in Patent Literature 2, there is a possibility that in the high temperature region, the elasticity decreases, and sufficient sealing properties are not obtained, or that by use under high temperature and pressurization, the resin composition deforms plastically, and the seal performance deteriorates.

**Citation List**

**Patent Literature**

Patent Literature 1: Japanese Patent Application Laid-Open No. 2006-283898
Patent Literature 2: Japanese Patent Application Laid-Open No. 7-173357
Patent Literature 3: Japanese Patent Application Laid-Open No. 2005-264068

**Summary of Invention**

**Technical Problem**

The present invention has been made in view of the above circumstances, and it is an object of the present invention to provide a resin composition that can maintain excellent elasticity even after being used under high temperature and pressurization for a long period, and a seal member using the same.

**Solution to Problem**

As a result of diligent study in view of the above object, the present inventors have found that in a resin composition containing a rubber component and a thermoplastic resin, by setting the maximum value of loss tangent (tan $\delta$) in the temperature range of 20°C to 150°C to 0.2 or less, excellent elasticity can be maintained even after use under high temperature and pressurization for a long period, and therefore, a seal member comprising the above resin composition can maintain excellent sealing properties over a long period even under severe use conditions, and thought of the present invention. Specifically, one aspect of a resin composition according to the present invention is a resin composition comprising a rubber component; and a thermoplastic resin, wherein a maximum value of loss tangent (tan δ) in a temperature range of 20°C to 150°C is 0.2 or less.

In the above aspect, it is preferable that the rubber component be an acrylic rubber.

In the above aspect, it is preferable that the thermoplastic resin be polyvinylidene fluoride.

In the above aspect, it is preferable that a circle-equivalent diameter of the thermoplastic resin in the resin composition be 40 nm or more and 100 nm or less.

One aspect of a seal member according to the present invention uses the above resin composition according to the present invention.

**Advantageous Effects of Invention**

A seal member comprising the resin composition of the present invention can maintain excellent sealing properties over a long period even under severe use conditions.

**Brief Description of Drawings**

[Figure 1] Figure 1 is a cross-sectional view showing one example of a conventional seal member.
[Figure 2] Figure 2 is a graph showing loss tangent (tan δ) in dynamic viscoelasticity for samples of a dynamically crosslinked resin, polyvinylidene fluoride, and Comparative Example 1.
[Figure 3] Figure 3 is a graph showing loss tangent (tan δ) in dynamic viscoelasticity for samples of Examples 2, 4, and 5 and Comparative Example 1.
[Figure 4] Figure 4 is a photograph of a sample of Example 2 magnified 8000 times by using a transmission electron microscope (TEM).
[Figure 5] Figure 5 is a photograph of a sample of Example 4 magnified 8000 times using a TEM.

**Description of Embodiments**

One embodiment of a resin composition and a seal member using the same according to the present invention will be described in detail below.

The resin composition according to this embodiment comprises a mixture containing a rubber component and a thermoplastic resin, and the maximum value of loss tangent (tan δ), which is the ratio (E"/E') of loss modulus (E") to storage modulus (E') by dynamic viscoelasticity measurement, at 20°C to 150°C is 0.2 or less. Generally, it is known that as the tan δ increases, that is, as the loss modulus (E") increases, plastic deformation is more likely to occur, and as the tan δ decreases, that is, as the storage modulus (E') increases, the resilience increases. In addition, usually, the tan δ has temperature dependence.

In this embodiment, the maximum value of the tan δ of the resin composition in the temperature range of 20°C to 150°C is set to 0.2 or less, and therefore, high resilience can be maintained even in a high temperature region. In the resin composition in this embodiment, the compression set after high temperature and pressurization is low, and excellent rubber elasticity can be maintained even after use for a long period, and therefore, excellent sealing properties can be maintained over a long period even under severe use conditions. The maximum value of the tan δ in the above temperature range is preferably 0.15 or less, more preferably 0.13 or less.

The value of the tan δ in the above temperature range can be controlled by the type of the thermoplastic resin and the amount of the thermoplastic resin added. For example, when a thermoplastic resin whose glass transition temperature is 150°C or higher is used, or a thermoplastic resin whose glass transition temperature is lower than 150°C is used, the value of the tan δ can be decreased by decreasing the amount of the thermoplastic resin added. However, considering the injection moldability of the resin composition, the use of a thermoplastic resin whose glass transition temperature is high cannot always be said to be advantageous. In addition, in order to maintain the mechanical strength and creep resistance properties of the seal member, there is a limit to the decrease in the thermoplastic resin. On the other hand, a method for decreasing the tan δ value near the glass transition temperature of the thermoplastic resin by highly dispersing the rubber component and the thermoplastic resin is preferable because excellent rubber elasticity in the high temperature region can be achieved while the injection moldability, mechanical strength, and creep resistance properties of the resin composition are maintained.

The hardness, that is, Shore hardness A measured by a method described later, of the resin composition constituting the seal member in this embodiment is preferably set to 60 to 98, more preferably 70 to 95. By defining the Shore hardness in this range, in the seal member, deformation due to hydraulic pressure during use is less likely to occur, high sealability can be maintained even after operation for a long time, and mountability on a shaft groove or the like improves.

The rubber component in this embodiment may be added as a crosslinked rubber or a thermoplastic elastomer, or can also be added as a dynamically crosslinked resin. The surface hardness of these rubber components is preferably 60 to 90 in terms of Shore hardness A.

Examples of the crosslinked rubber include natural rubbers, synthetic isoprene rubbers (IR), fluororubbers, butadiene rubbers (BR), styrene-butadiene rubbers (SBR), chloroprene rubbers (CR), acrylonitrile-butadiene copolymerized rubbers (NBR), butyl rubbers (IIR), halogenated butyl rubbers, urethane rubbers, silicone rubbers, and acrylic rubbers. From among these crosslinked rubbers, one can also be used, but two or more can also be mixed and used, and the crosslinked rubber can also be used in combination with a thermoplastic elastomer and a dynamically crosslinked resin described later.

Examples of the thermoplastic elastomer include polyester-based elastomers, polyolefin-based elastomers, fluorine-based elastomers, silicone-based elastomers, butadiene-based elastomers, polyamide-based elastomers, polystyrene-based elastomers, and urethane-based elastomers. From among these thermoplastic elastomers, one can also be used, but two or more can also be mixed and used. In terms of injection moldability and heat resistance, among the above thermoplastic elastomers, polyester-based elastomers and polyamide-based elastomers are preferable.

Examples of commercial products of polyester-based elastomers include "Hytrel" manufactured by DU PONT-TORAY CO., LTD., "PELPRENE" manufactured by Toyobo Co., Ltd., and "PRIMALLOY" manufactured by Mitsubishi Chemical Corporation, and examples of commercial products of polyamide-based elastomers include "Pebax" manufactured by ARKEMA, and "UBESTAXPA" manufactured by Ube Industries, Ltd.

A dynamically crosslinked resin has a structure in which a crosslinked rubber phase is dispersed in a thermoplastic resin phase. The thermoplastic resin used in the dynamically crosslinked resin is not particularly limited, and examples thereof include polyesters and polyamides (PA). On the other hand, the rubber is not particularly limited, and examples thereof include natural rubbers, cis-1,4-polyisoprene, high cis polybutadiene, styrene-butadiene copolymer rubbers, ethylene-propylene rubbers (EPM), ethylene-propylene diene rubbers (EPDM), chloroprene rubbers, butyl rubbers, halogenated butyl rubbers, acrylonitrile-butadiene copolymer rubbers, and acrylic rubbers.

The dynamically crosslinked resin can be manufactured by known methods. For example, by previously mixing a crosslinking agent into an uncrosslinked rubber component, and melting and kneading a thermoplastic resin component and the uncrosslinked rubber component using a twin screw extruder, the dispersion and crosslinking of the rubber component can be simultaneously performed. Such a dynamically crosslinked resin is also available as a commercial product. Examples of commercial products of dynamically crosslinked resins in which an acrylic rubber is dispersed in a polyester resin include "ETPV" manufactured by DuPont, and "NOFALLOY" (TZ660-7612-BK, TZ660-6602-BK, and the like) manufactured by NOF CORPORATION. In addition, examples of commercial products of dynamically crosslinked resins in which an acrylic rubber is dispersed in a polyamide resin include "Zeotherm" manufactured by ZEON Corporation.

The content of the rubber component is preferably set to 60% by mass to 95% by mass, more preferably 80% by mass to 95% by mass, based on the mass of the entire resin composition constituting the seal member. By defining the content of the rubber component in the above range, the compression set of the resin composition becomes lower, and better sealing properties are obtained over a long period.

The surface hardness of the thermoplastic resin to be mixed with the above rubber component is preferably 70 or more, more preferably 90 or more, in terms of Shore hardness D. Examples of the thermoplastic resin include polyesters, such as polyethylene terephthalate (PET), polybutylene terephthalate (PBT), polytrimethylene terephthalate (PTT), and polyethylene naphthalate (PEN), polypropylene (PP), syndiotactic polystyrene resins, polyoxymethylene (POM), polyamides (PA), polycarbonates (PC), polyphenylene ether (PPE), polyphenylene sulfide (PPS), polyimides (PI), polyamideimides (PAI), polyetherimides (PEI), polysulfones (PSU), polyethersulfones, polyketones (PK), polyetherketones (PEK), polyetheretherketones (PEEK), polyetherketoneketones (PEKK), polyarylates (PAR), polyethernitriles (PEN), polytetrafluoroethylene (PTFE), and polyvinylidene fluoride (PVDF). These resins may be copolymers or modified forms, and two or more types may be mixed. Considering injection moldability, heat resistance, and the like, PBT, PA, PPS, and PVDF are preferable among the above thermoplastic resins.

The amount of the thermoplastic resin added is preferably set to 5% by mass to 40% by mass, more preferably 5 by mass to 20% by mass, based on the mass of the entire resin composition constituting the seal member. By adding the thermoplastic resin in this range, the mechanical strength and creep resistance properties of the seal member improve, excellent sealing properties can be maintained even after use under pressurization conditions for a long time, and use in a region in which the PV value is high is also possible.

Various fillers can also be added to the resin composition in this embodiment according to the application used and the properties required. Examples of inorganic fillers include fibrous inorganic fillers, such as glass fibers, carbon fibers, carbon nanotubes, alumina fibers, potassium titanate fibers, boron fibers, and silicon carbide fibers. By the addition of fibrous inorganic fillers, the mechanical strength and creep resistance properties of the seal member improve, excellent sealing properties are obtained, and use in a region in which the PV value is high is also possible. Among the above fibrous inorganic fillers, glass fibers, carbon fibers, and carbon nanotubes are preferable. Carbon nanotubes not only exhibit a reinforcing function as a fibrous inorganic filler, but are also effective as a filler for improving sliding properties like inorganic fillers described later.

In this embodiment, for the purpose of improving sliding properties and the like, other inorganic fillers can also be added. Examples of the other inorganic fillers include calcium carbonate, montmorillonite, bentonite, talc, silica, isinglass, mica, barium sulfate, calcium sulfate, calcium silicate, molybdenum disulfide, glass beads, graphite, fullerenes, carbon (amorphous) powders, anthracite powders, aluminum oxide, titanium oxide, magnesium oxide, potassium titanate, and boron nitride.

The amount of inorganic fillers added (total) is preferably set to 5% by mass to 10% by mass based on the mass of the entire resin composition constituting the seal member. In addition, when carbon nanotubes are added as an inorganic filler, the amount of carbon nanotubes added is preferably set to 1% by mass to 5% by mass based on the mass of the entire resin composition constituting the seal member. In a seal member to which an inorganic filler is added in this range, excellent mechanical strength and sliding properties are obtained, and better sealing properties can be maintained over a long period.

In the resin composition in this embodiment, it is preferable that the rubber component and the thermoplastic resin be highly dispersed. When the rubber component and the thermoplastic resin are highly dispersed, an increase in the tan $\delta$ of the thermoplastic resin near the glass transition temperature is suppressed, and the value of the tan $\delta$ can be maintained low even in the high temperature region. Thus, the resin composition can maintain high resilience even in the high temperature region, and therefore, excellent sealing properties are obtained. Further, the plastic deformation of the resin composition is suppressed even under high temperature pressurization conditions, and therefore, excellent sealing properties can be maintained over a long period even under severe use conditions.

In the resin composition in this embodiment, it is preferable that a fine thermoplastic resin be highly dispersed in a rubber component. In such a configuration, plastic deformation due to the high flowability of the thermoplastic resin near the glass transition temperature can be effectively suppressed by the surrounding rubber component, and an increase in tan $\delta$ can be further suppressed. Therefore, higher resilience is maintained even in the high temperature region, and excellent sealing properties are obtained. The plastic deformation of the above resin composition is suppressed even under high temperature pressurization conditions, and excellent sealing properties can be maintained over a long period even under severe use conditions. The size (particle size) of the thermoplastic resin dispersed in the resin composition in this embodiment is not particularly limited, and the circle-equivalent diameter (particle diameter) of the thermoplastic resin is preferably 40 nm or more and 100 nm or less. The size of the thermoplastic resin can be calculated by identifying the thermoplastic resin from a transmission electron microscope (TEM) observation photograph of a sample adjusted by a RuO4-stained ultrathin section method.

The method for mixing the resin composition in this embodiment is not particularly limited as long as it is a method in which the tan $\delta$ is in the above range, and it is preferable to perform mixing using Laboplastomill, a twin screw extruder, or the like. In order to reliably achieve fine and uniform dispersion, it is desirable to perform mixing under high shear conditions using a twin screw extruder in which screw shafts are combined with kneading disks in which shear action occurs. In addition, a commercial high shear molding processing machine can also be used. The dispersibility can be controlled by the shape and length of the screw, reflux hole diameter (feedback hole diameter), screw rotation speed, shear mixing time, and the like.

The applications of the resin composition of the present invention are not particularly limited, and it is used as a gasket, a tube, a packing, a hose, a seal member, or the like in various fields. Particularly, it is preferably used as a seal member. Examples of the seal member include seal rings for rotational motion and seal rings for reciprocating motion, and particularly, it is preferable to apply the resin composition to a seal ring mounted on the CVT or the like of an automobile.

When the resin composition of the present invention is used as a CVT seal ring, it is preferable to use an endless type seal ring having no abutment (joint or junction) in order to reliably prevent oil leakage in an unloaded state. The resin material of the present invention has flexibility, and therefore is excellent in mountability also as an endless type, and by providing a single type, mounting becomes easier. On the other hand, an abutment can also be provided depending on the application and the like. The abutment shape in this case is not particularly limited, and known abutments, such as a right angle (straight) abutment, an oblique (angle) abutment, and a stepped (step) abutment as well as a double angle abutment, a double cut abutment, and a triple step abutment, can be used.

**Examples**

The present invention will be described in more detail by the following Examples, but the present invention is not limited to these examples.

(Example 1)

A polyester resin/acrylic rubber-based dynamically crosslinked resin was used as a rubber component, and a polyvinylidene fluoride resin was used as a thermoplastic resin, and they were mixed by a twin screw extruder in which φ 92 mm screws in which lead was combined with kneading disks were installed. Here, the polyester resin/acrylic rubber-based dynamically crosslinked resin and the polyvinylidene fluoride resin were each fed by a side feeder, and they were mixed under the shear conditions of a temperature of 240°C and a number of revolutions of the screw of 200 rpm to obtain pellets. For the polyester resin/acrylic rubber-based dynamically crosslinked resin and the polyvinylidene fluoride resin, commercial products were used, and the mass ratio (the polyester resin/acrylic rubber-based dynamically crosslinked resin:the polyvinylidene fluoride resin) was set to 90:10. The obtained pellets were injection-molded, each measurement sample was fabricated, and loss tangent (tan $\delta$) in dynamic viscoelasticity, surface hardness (Shore hardness), compression set, and the amount of static leakage were measured by the following methods. The results are shown in Table 1. Here, the size of the seal ring of the sample for the measurement of the amount of static leakage was set so that the amount of compression was 25% in a state in which the seal ring was mounted in a shaft groove. In addition, for the tan $\delta$, the maximum value in the temperature range of 20°C to 150°C is shown.

(Examples 2 to 5)

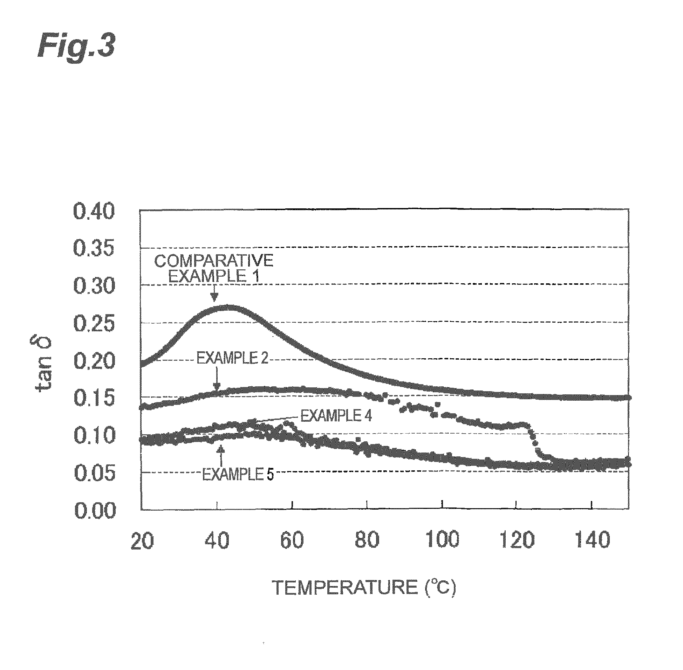

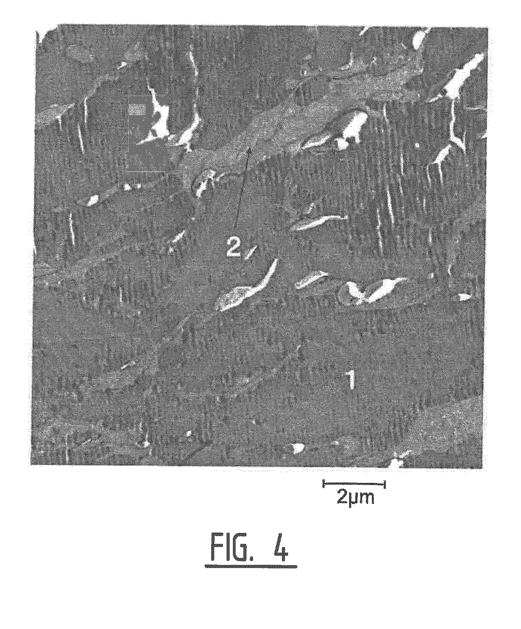

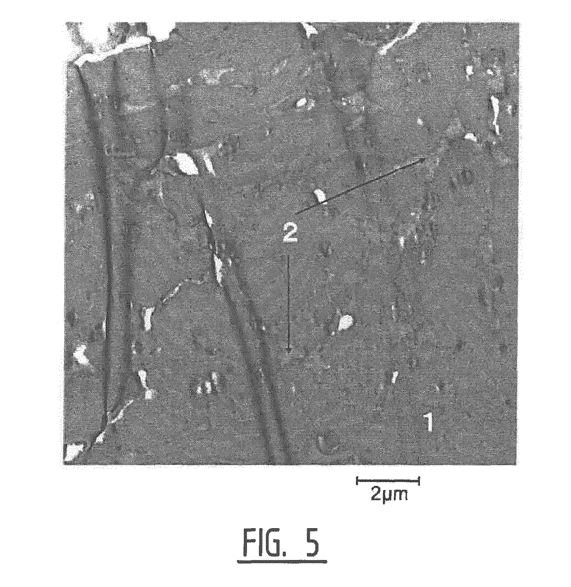

Measurement samples were fabricated as Example 1 except that the screw rotation speed of the twin screw extruder was set to 300 rpm (Example 2), 400 rpm (Example 3), 500 rpm (Example 4), and 600 rpm (Example 5). Loss tangent (tan $\delta$) in dynamic viscoelasticity, surface hardness, compression set, and the amount of static leakage of each sample was measured. The results are shown in Table 1. In addition, the measurement results of the tan $\delta$ in the temperature range of 20°C to 150°C for the samples of Example 2, Example 4, and Example 5 are shown in Figure 3. Further, the observation of the texture of the samples of Examples 2 and 4 was performed using a transmission electron microscope (TEM). The measurement samples were adjusted by a RuO4-stained ultrathin section method. TEM observation photographs of the samples of Example 2 and Example 4 are shown in Figure 4 and Figure 5, respectively (magnification: 8000x).

(Comparative Examples 1 and 2)

Measurement samples were adjusted and evaluation was performed as Example 1 except that the number of revolutions of the screw was set to 100 rpm (Comparative Example 1) and 150 rpm (Comparative Example 2). The results of measuring loss tangent (tan $\delta$) in dynamic viscoelasticity, surface hardness, compression set, and the amount of static leakage of the samples of Comparative Example 1 are shown in Table 1.

(Measurement of Loss Tangent (tan $\delta$) in Dynamic Viscoelasticity)

The resin compositions of Examples 1 to 5 and Comparative Examples 1 and 2 were hot pressed to fabricate sheets having a thickness of 500 to 1000 $\mu$m, and then, the sheets were cut into a width of 3 mm and a length of 20 mm to provide strip-like measurement samples. For the dynamic viscoelasticity measuring apparatus, a thermomechanical analysis apparatus manufactured by SII NanoTechnology Inc. was used, and measurement was performed by a temperature increase method in air at a measurement frequency of 0.1 Hz and a temperature increase rate of 3°C/min. Loss tangent (tan $\delta$ = E"/E') was automatically calculated from dynamic storage modulus (E') and dynamic loss modulus (E") at each measurement temperature, and plotted. As reference, similar measurement samples were fabricated and evaluation was performed in the same manner also for the polyester resin/acrylic rubber-based dynamically crosslinked resin and the polyvinylidene fluoride resin that were the raw materials of the Examples and the Comparative Examples.

(Measurement of Surface Hardness)

Shore hardness was measured based on JIS K7215.

(Measurement of Compression Set Cs)

The measurement of compression set Cs was performed as follows with reference to JIS K6262. A test piece of 5 mm x 15 mm and a thickness of 2 mm obtained by injection molding was mounted on a compression apparatus, compressed to an amount of compression of 25%, and then immersed in an Automatic Transmission Fluid (ATF) previously adjusted to 150°C, for 100 hours. After the completion of the heat treatment, the ATF on the surface of the test piece taken out of the ATF and removed from the compression apparatus was wiped off, and the test piece was allowed to stand at room temperature for 30 minutes, and then, the thickness ($t_2$) of the central portion of the test piece was measured. The compression set Cs was calculated from $t_2$ at this time by formula 1.

$$Cs = (t_0 - t_2)/(t_0 - t_1) \times 100 \text{ ... (formula 1)}$$

$t_0$: the original thickness of the test piece (mm)
$t_1$: the thickness of the spacer (mm)
$t_2$: thickness after 30 minutes after the test (mm)

(Measurement of Amount of Oil Leakage in Stationary State)

By using each of the resin compositions of Examples 1 to 5 and Comparative Examples 1 and 2, a seal ring having no abutment was fabricated by injection molding. The obtained seal ring was mounted in a shaft groove provided on the outer peripheral surface of a shaft, and installed in a static leakage performance test apparatus. Here, a hydraulic pressure chamber was filled with 165 cc of an ATF, the ATF leaked from the seal ring at room temperature (oil temperature: 25°C) in a stationary state was recovered from an oil discharge groove, and the cumulative amount of oil leakage for 7 days was measured. The measurement results are shown in Table 1 as the initial amount of static oil leakage. Here, the amount of static oil leakage was expressed as a relative value taking the value of Comparative Example 1 as 100. The size of the seal ring was set so that the amount of compression was 25% in a state in which the seal ring was mounted in the shaft groove.

In addition, each seal ring was mounted in a shaft groove provided on the outer peripheral surface of a shaft, a housing was reciprocated at a stroke of 10 mm/s for an accumulation of 1 Km at a hydraulic pressure of 4.0 MPa and an oil temperature of 150°C, and then, the amount of oil leakage was measured again by the above method. The measurement results are shown in Table 1 as the amount of static oil leakage after operation. Also here, the amount of static oil leakage was expressed as a relative value taking the initial amount of static oil leakage of Comparative Example 1 as 100.

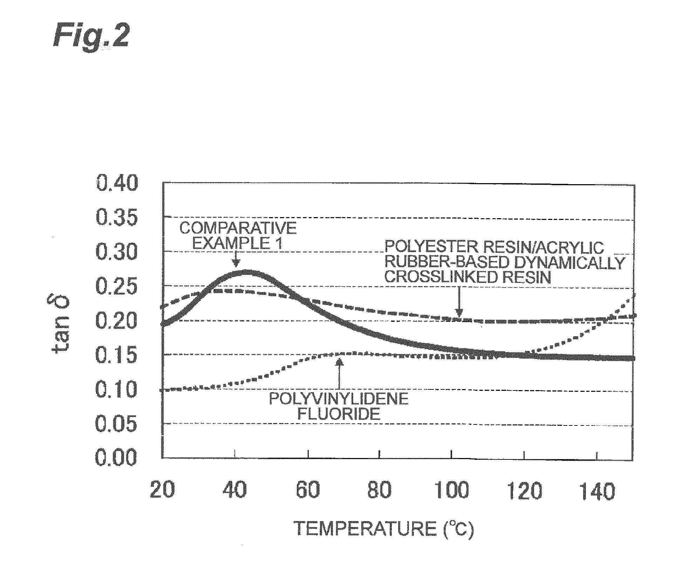

From Table 1, it is found that by changing the screw rotation speed of the twin screw extruder, the maximum value of tan δ at 20°C to 150°C can be controlled. The measurement results of the tan δ in the temperature range of 20°C to 150°C for the polyester resin/acrylic rubber-based dynamically crosslinked resin, the polyvinylidene fluoride, and Comparative Example 1 are shown in Figure 2. For the polyester resin/acrylic rubber-based dynamically crosslinked resin alone, the tan δ was 0.2 or more in the entire temperature range of 20°C to 150°C, and a gentle peak was observed at 30°C to 40°C. This peak is considered to be due to the glass transition of polybutylene terephthalate (PBT) that is the polyester resin of the polyester resin/acrylic rubber-based dynamically crosslinked resin. In addition, for the polyvinylidene fluoride, the tan δ was a low value of 0.1 near room temperature, but it was found that the tan δ increased with an increase in temperature. On the other hand, for Comparative Example 1 in which the polyester resin/acrylic rubber-based dynamically crosslinked resin was mixed with polyvinylidene fluoride, a clear peak considered to be due to the glass transition of PBT was observed, but it was found that the tan δ tended to decrease on the high temperature side.

From Table 1, it is found that in the samples of Comparative Examples 1 and 2 in which the maximum value of tan δ in the temperature range of 20°C to 150°C is more than 0.2, the compression set is as high as 100%, the amount of static oil leakage is also large, and sufficient sealing properties are not obtained. On the other hand, for the samples of Example 1 in which the screw rotation speed was set to 200 rpm, the maximum value of tan δ was 0.18, the compression set decreased, and the amount of static oil leakage decreased significantly, and an improvement in sealing properties was observed. From this, the effectiveness of the resin composition of the present invention in which the maximum value of tan δ in the temperature range of 20°C to 150°C was set to 0.2 or less was confirmed. It was found that for Examples 2 to 5 in which the screw rotation speed was further increased, the maximum value of tan δ decreased further, and the compression set also decreased. It was confirmed that in all samples of Examples 1 to 5, the initial amount of static oil leakage was 0, and they had excellent sealing properties. However, after operation under high temperature pressurization conditions, oil leakage was observed in the sample of Example 1, On the other hand, for the samples of Examples 2 and 3 in which the maximum value of tan δ was 0.16 and 0.14, the amount of oil leakage after operation under high temperature and pressurization conditions decreased significantly compared with Example 1, and for Examples 4 and 5 in which the maximum value of tan δ was 0.13 or less, no leakage of oil was observed even after operation under temperature high pressure conditions.

The measurement results of the tan δ in the temperature range of 20°C to 150°C for the samples of Comparative Example 1 and Examples 2, 4, and 5 are shown in Figure 3. It was found that, compared with the sample of Comparative Example 1, for the sample of Example 2, the value of tan δ decreased in the entire temperature range, and the peak near 40°C to 50°C considered to be due to the glass transition of PBT disappeared. In addition, it was confirmed that for the samples of Examples 4 and 5, the tan δ value decreased more than that in the sample of Example 2, particularly on the low temperature side. TEM observation photographs of the samples of Example 2 and Example 4 are shown in Figure 4 and Figure 5, respectively. Here, portions looking like light gray islands are considered as polyvinylidene fluoride 2 that is the thermoplastic resin, and seen to be dispersed in a matrix comprising a rubber component 1. It is found that, compared with Example 2, for Example 4, the size (particle diameter) of the polyvinylidene fluoride is smaller, and the polyvinylidene fluoride is highly dispersed. It is considered that the thermoplastic resin having a fine size was uniformly dispersed in the rubber component in this manner, and thus, plastic deformation due to the flow of the thermoplastic resin was more effectively suppressed by the rubber component (acrylic rubber) 1 around the thermoplastic resin, and the low tan δ value was maintained in the entire temperature region. It was found that in the resin composition of the present invention in which the tan δ in the temperature range of 20°C (near room temperature) to 150°C was 0.2 or less, the plastic deformation of the thermoplastic resin was effectively suppressed, and rubber elasticity was maintained even in the high temperature region, and therefore, high sealing properties were maintained even after operation under severe conditions.

[Table 1]

| | Number of screw revolutions (rpm) | tan δ | Shore A hardness | Compression set (%) | Amount of static oil leakage | |
|---|---|---|---|---|---|---|
| | | Max (20°C-150°C) | | | Initial | After operation |
| Example 1 | 200 | 0.18 | 88 | 97 | 0 | 80 |
| Example 2 | 300 | 0.16 | 85 | 95 | 0 | 43 |
| Example 3 | 400 | 0.14 | 78 | 80 | 0 | 23 |
| Example 4 | 500 | 0.12 | 75 | 75 | 0 | 0 |
| Example 5 | 600 | 0.11 | 74 | 65 | 0 | 0 |
| Comparative Example 1 | 100 | 0.27 | 88 | 100 | 100 | 520 |
| Comparative Example 2 | 150 | 0.22 | 87 | 100 | 40 | 100 |

## Industrial Applicability

According to the present invention, a resin composition that can maintain excellent sealing properties over a long period even under severe use conditions, or a seal member composed of the resin composition is provided.

## Reference Signs List

1 : rubber component, 2 : polyvinylidene fluoride

## Claims

1.   A resin composition comprising: a rubber component and a thermoplastic resin, wherein a maximum value of loss tangent (tan δ) in a temperature range of 20°C to 150°C is 0.2 or less.

2.   The resin composition according to claim 1, wherein the rubber component is an acrylic rubber.

3.   The resin composition according to claim 1 or 2, wherein the thermoplastic resin is polyvinylidene fluoride.

4.   The resin composition according to any one of claims 1 to 3, wherein a circle-equivalent diameter of the thermoplastic resin in the resin composition is 40 nm or more and 100 nm or less.

5.   A seal member using the resin composition according to any one of claims 1 to 4.

*Fig.1*

## Fig.2

*Fig.3*

2µm

FIG. 4

FIG. 5

| | | |
|---|---|---|
| **INTERNATIONAL SEARCH REPORT** | International application No. | |
| | PCT/JP2013/061220 | |

**A. CLASSIFICATION OF SUBJECT MATTER**
*C08L21/00*(2006.01)i, *C08L27/16*(2006.01)i, *C08L33/08*(2006.01)i, *C08L101/00* (2006.01)i

According to International Patent Classification (IPC) or to both national classification and IPC

**B. FIELDS SEARCHED**

Minimum documentation searched (classification system followed by classification symbols)
C08L21/00, C08L27/16, C08L33/08, C08L101/00

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2007-191576 A (Daikin Industries, Ltd.),<br>02 August 2007 (02.08.2007),<br>claims; examples<br>(Family: none) | 1,3,4,5<br>2 |
| P,X | WO 2012/096387 A1 (Riken Corp.),<br>19 July 2012 (19.07.2012),<br>claims; examples<br>(Family: none) | 1-5 |
| A | JP 05-186606 A (Tokai Rubber Industries, Ltd.),<br>27 July 1993 (27.07.1993),<br>entire text<br>(Family: none) | 1-5 |

☐ Further documents are listed in the continuation of Box C.     ☐ See patent family annex.

| | |
|---|---|
| \*   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| | |
|---|---|
| Date of the actual completion of the international search<br>    04 June, 2013 (04.06.13) | Date of mailing of the international search report<br>    18 June, 2013 (18.06.13) |
| Name and mailing address of the ISA/<br>    Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006283898 A
- JP 7173357 A

- JP 2005264068 A